# EUROPEAN PATENT SPECIFICATION

(11) **EP 1 487 754 B1**
(45) Date of publication and mention of the grant of the patent: **26.04.2006**
(21) Application number: 02718507.3
(22) Date of filing: 28.03.2002
(51) Int. Cl.: C04B 7/44, C04B 7/22

(54) **PROCESS FOR MANUFACTURE OF HIGH IRON HYDRAULIC CEMENT CLINKER**
VERFAHREN ZUR HERSTELLUNG VON HYDRAULISCHEM ZEMENTKLINKER MIT HOHEM EISENGEHALT
PROCEDE DE FABRICATION DE CLINKER HYDRAULIQUE A TENEUR ELEVEE EN FER

(43) Date of publication of application: 22.12.2004
(73) Proprietor: COUNCIL OF SCIENTIFIC AND INDUSTRIAL RESEARCH, New Delhi 110 001 (IN)
(72) Inventor: NAYAK, Bansidhar Regional Research Laboratory, Orissa (IN); MISRA, Vibhuti, Narain, Orissa (IN)
(74) Representative: Kihn, Pierre Emile Joseph
(86) International application number: PCT/IN2002/000084
(87) International publication number: WO 2003/082764

(56) References cited:
- DE-C- 800 218
- US-A- 2 090 363
- US-A- 3 194 673
- NAYAK,B.D. ET AL: "Production of cement clinker from mixture of paper plant sludge, fly ash and coke breeze by the Down Draft sintering technique" WORLD CEMENT, vol. 27, no. 9, 1996, page 121-122,125-127 XP008012518 Palladian Publications Ltd
- NAYAK,B.D. ET AL.: "Manufacture of low cost cements from industrial wastes by down draft sintering process" CEM.BUILD. MATER.IND.WASTES,PROCEEDINGS NATIONAL CONFERENCE 1992, pages 292-296, XP001134913 Tata McGraw-Hill Publ., New Dehli, India
- DATABASE EPODOC [Online] EUROPEAN PATENT OFFICE, THE HAGUE, NL; XP002227505 & CN 1 052 838 A (ZHONG,XINGBIAO) 10 July 1991 (1991-07-10) -& DATABASE CA [Online] CHEMICAL ABSTRACTS SERVICE, COLUMBUS, OHIO, US; X.ZHONG ET AL.: "Multifunctional high-iron cement clinker and its manufacture" retrieved from STN Database accession no. 116:179837 XP002227504 & CN 1 052 838 A (ZHONG,XINGBIAO) 5 August 1990 (1990-08-05)

## Description

### Field of the invention

The present invention relates to a process for manufacture of high iron hydraulic cement clinker using down draft sintering technique.

### Background of the invention

High iron cement clinker is a non-portland type of cement clinker which contains iron (Fe₂O₃) to the extent of 40% and above as major chemical constituent. The cement made from high iron cement clinker possesses clearly and high binding strength on hydration. This type of high iron hydraulic cement is usable as a substitute to Portland cement in construction activities, a special cement in sulphate resistance constructions, a metallurgical cement or binder in briquetting, pelletisation and sintering of iron ore, iron oxide and metal containing fines for iron making and a hydraulic mineral binder for absorbing water soluble metals in treatment and stabilization of hazardous toxic solid wastes.

Portland and aluminous cements are known cementitious systems in which calcium silicates and calcium aluminates respectively are the major cement mineral phases. Iron (Fe₂O₃) content in these cements are very low and ranges 2 to 6% in Portland cement and up to 15% (maximum) in aluminous cement. Iron and iron bearing mineral phases existing in these cementitious systems are quite insignificant in respect to quantity and cement property. Chemically and mineralogically the high iron cement is quite different from the Portland and aluminous cements. Iron (Fe₂O₃) in high iron cement is beyond the limit of the above two cements. Mainly, the calcium-iron and calcium-alumina-iron type of ferric phases are the major mineral constituents of high iron cement clinker responsible for developing hydraulic property and strength of the cement. Hydraulic property and development of strength of high iron cement largely depend on the mineral structure and degree of solid solution of different ferrite phase, crystallinity and presence of different calcium silicate and other mineral phases. In high iron cement clinker, the formation of different ferrite mineral phases mainly depend on the chemical parameters of calcium, alumina and iron; sintering and cooling conditions. Comparatively, ferrite mineral phases of high iron cement clinker form at much lower temperature than the calcium silicates of the Portland cement clinkers. In respect to hydraulic property and strength, the performance of high iron cement is also better than the Portland cement. Lime and iron bearing raw materials are the main source for manufacture of high iron cement. Owing to the many advantageous qualities like cost effectiveness, energy efficiency and better performance of high iron cement than the Portland cement, the development of suitable processes in production of high iron cement clinker in the present context has been given more attention.

At present, iron rich solid wastes are abundantly available in different metallurgical, chemical and mining industries. Accumulation of these wastes without proper use is a significant problem in respect of the environmental pollution caused. Thus, use of these types of.waste materials may find a suitable value-added application in making high iron cements. Although some research activities have been carried out in past in this area but technological development in production of high iron cement has not been made significant progress.

References is made to the following disclosures:
1. Kimenko Z.G; Tikhonov, V.A. Bobik, G.L; Petrovskaya, N.L. : Dmitrievskii, V.S.; Ozerov, V.M. (USSR). Visn L'Viv. Politekh. Inst. 1975, 95, 98-100 (Ukraine). Production of high iron cement for sintering iron ore concentrate (Chemical Ab. : 1975, 85 : 1294451g).
2. Tikhonov, V.A; Klimenko, Z.G: Berezhnenko, E.T.; Zhavoronkova, E.V. (L'Viv. Politekh, Inst. L'Vov, USSR). Tr-Mezhdunar. Kongr. Khim. Tsem., 6^{th} 1974 (Pub. 1976), 3, 154-6 (Russ). Edited by Boldyrev, A.S. ; Stroiizdat : Moscow, USSR. Special highly ferruginous cement (Chemical Abs. : 1977, 86 : 110385n).
3. Mehta, P.K. (Univ. of California). High iron oxide hydraulic cement. US 4,036,657 (Cl. 106-89, C04B7/02), 19 Jul. 1977, Appl. 598, 411. 23 July, 1975 (Chemical Abs. : 1977, 87: 121920e).
4. Buraev, M.L.; Tuzyak, V.e; Shpinova, L.G. (L'Viv. Politekh, Inst., L'Vov, USSR). Synthesis of alumina-iron oxide cement from red slime. Kompleskn Ispol'. Miner. Syr'ya, 1984 (2) 72-75 (Russ) (Chemical Abs. : 1985,102 : 50050h).
5. Feng. Xiuji, Zhu, Yufeng (Wuhan Inst. Build Mater. Wuhan, Peop. Rep. China). Research on an early strength cement containing high content of iron. Congr. Int. Quim. Cemento [An] 8^{th} 1986, 2, 285-92 (Eng) (Chemical Abs. : 1988, 109 : 78641y).
6. Huo, Xingong; Zhen, Yinchum; Liu, Zhencai; Wang, Baoan; Wang, Suqing; Ruan, Doutian (Benxi Steel Co.) Faming Zhuanli Shenqing Gongkai Shoumingashu. Production of ferrite cement using highly activated slag from reolving furnace steel smelting. CN 87, 100, 826 (CI. C04B7/153), 16 Dec. 1987. Appl. 13 Feb. 1987 (Chemical Abs. 1989, 110: 43938u).
wherein efforts have been made to develop iron rich hydraulic cement clinker using the raw materials like iron ore, red slime, steel melting slag by adopting conventional cement kilns and by smelting in steel smelting converters.

The drawbacks of the earlier processes are the limitations in the use of various types of iron rich raw materials, deterioration of refractory life due to the formation of low temperature iron rich liquid phase, difficulty in maintaining proper reducing and oxidizing atmosphere and faster cooling conditions to achieve desired iron rich hydraulic cement mineral phases, involvement of more process steps to make clinker by steel smelting converter, energy intensive of grinding of fused and melted iron rich clinker particles, etc.

### Object of the invention

The main object of the invention is to provide a process for manufacture of high iron hydraulic cement clinker using down draft sintering technique which obviates the drawbacks as detailed above.

Another object of the invention is to maintain the flexibility in the process for utilization of wide varieties of raw materials, fines, solid wastes etc. containing lime and iron.

Still another object of the invention is to use coke, coal, char and carbon containing solid wastes as the source of fuel in the process.

Yet another object of the invention is to maintain easier raw material processing and sintering steps in the process to eliminate the use of refractories and high temperature melting operations.

Yet another object of the invention is provide an eco-friendly process and to use simpler plant machineries for commercial production in batch and continuous scale.

Yet another object of the invention is to maintain high productivity and low energy consumption in manufacture of high iron cements consisting of 40% iron (Fe₂O₃) and above.

### Summary of the invention

Accordingly, the present invention provides a process for the manufacture of high iron hydraulic cement clinker wherein Fe₂O₃ is at least 33 % using down draft sintering technique which comprises preparing a homogenous raw mixture of raw materials selected from limestone, lime, lime sludge, lime bearing solid wastes, iron ore, slime red mud, ferruginuous bauxite, laterite, clay, iron oxide containing metallurgical and chemical wastes, slag, coke breeze, coal char, carbonaceous sludge, carbon bearing solid wastes and any mixture thereof, wherein the chemical ratio of CaO/(Al₂O₃+Fe₂O₃), SiO₂(Al₂O₃+Fe₂O₃) and (Al₂O₃+Fe₂O₃) in the homogenized raw mixture is between 1.3 to 2.5, 0.2 to 0.5 and 0.25 to 0.8 respectively, with the content of Fe₂O₃ in the homogenized raw mixture being in the range of less than 40% and the content of solid carbon in the homogenized raw mixture being in the range of 4 to 12%, pelletising the resultant homogenized raw mixture in the presence of water to prepare granulated particles, sintering and cooling the pelletised granulated particles by down draft sintering technique to convert into clinker, grinding the clinker panicles with and without gypsum to make high iron hydraulic cements and binders for different applications.

The process for manufacture of high iron hydraulic cement clinker uses down draft sintering technique which comprises preparing a homogenous, raw mixture of raw materials selected from limestone, lime, lime sludge, lime bearing solid wastes, iron ore, slime red mud, ferruginuous bauxite, laterite, clay, iron oxide containing metallurgical and chemical wastes, slag, coke breeze, coal char, carbonaceous sludge, carbon bearing solid wastes and any mixture thereof, pelletising the resultant homogenized raw mixture in the presence of water to prepare granulated particles, sintering and cooling the pelletised granulated particles by down draft sintering technique to convert into clinker, grinding the clinker particles with and without gypsum to make high iron hydraulic cements and binders for different applications.

In one embodiment of the invention, the homogeneous raw mixture is prepared in semi-wet or dry form by blending or grinding depending the particle fineness.

In an embodiment of the invention, the chemical ratio of CaO/(Al₂O₃+Fe₂O₃), SiO₂/(Al₂O₃+Fe₂O₃) and (Al₂O₃+Fe₂O₃) in the homogenized raw mixture is between 1.3 to 2.5, 0.2 to 0.5 and 0.25 to 0.8 respectively.

In an embodiment of the invention, the particle fineness of the homogenized raw mixture is below 150 mesh (100 micron) size.

In yet another embodiment of the invention, the content of solid carbon ranges 4 to 12% in the homogenized mixture as feed to generate in-situ heat for sintering.

In still another embodiment of the invention, pelletization of the homogenized mixture is done in the in presence of water to make granulated particles below 15 mm sizes consisting of 8 to 15% water.

In still another embodiment of the invention, sintering of the granulated particles is done at a temperature in the range of 1050 to 1450°C to convert into clinker by down draft sintering, maintaining an operating condition of 300 to 600 mm bed height of the granulated particle, 200 to 800 mm water gauge (WG) air suction pressure below the bed, and 15 to 20 mm vertical sintering speed from top to bottom of the bed.

In still another embodiment of the invention, depending on the granulated particle size, the product obtained is cooled between 200 to 1000°C and 400 to 600°C.

In still another embodiment of the present both sintering and cooling operation in cement clinker formation is within the bed itself and is done in a period of 15 to 30 minutes.

In still another embodiment of the present invention, the sintering hearth is free of refractory lining and attached with scrubbers for cleaning of hot gas carrying dust particles to control pollution during sintering operation.

In still another embodiment of the present invention, the clinkerised lumpy aggregates are crushed for size reduction and then ground with or without gypsum and other additives to make cements and binders for different applications.

In another embodiment of the invention, a mineralizing agent selected from sulphate, fluorine, chlorine bearing minerals and chemical wastes is added to the raw mixture.

### Detailed description of the invention

The process details of the present invention are as follows:

Limestone, lime, lime sludge, lime bearing solid wastes, iron ore, slime red mud, ferruginuous bauxite, laterite, clay, iron oxide containing metallurgical and chemical wastes, slag, coke breeze, coal char, carbonaceous sludge, carbon bearing solid wastes are the different types of raw materials suitable for use in manufacture of high iron cement clinkers.

Sulphate, fluorine, chlorine bearing minerals and chemical wastes are also usable as mineralizing agent in the process. Iron is a major constituent of the high iron cement of which iron content is beyond the limit of Portland and aluminous cement. Norms for chemical parameters in designing the raw mix for high iron cement is also different than the Portland and aluminous cements. Based on the content of CaO, Fe₂O₃, Al₂O₃, SiO₂, carbon etc. of various materials and additives, it is mixed in different properties accordingly to maintain the essential chemical parameters such as 1.3 to 2.5 of CaO (Al₂O₃+Fe₂O₃), 0.2 to 0.5 of SiO₂ (Al₂O₃+Fe₂O₃), 0.25 to 0.8 of Al₂O₃+Fe₂O₃, 4 to 12% of carbon and with or without mineralizing agent in preparation of high iron cement raw mixtures. Depending on the particle fineness, moisture content and nature of materials, the raw mixture may be prepared in dry or semi dry from the blending or by grinding for complete homogenization. Particle fineness of the homogenized raw mixture is maintained preferable below 100 micron size. The homogenized raw mixture is then subjected to make pelletised particles of below 15 mm size granules by the pelletisation technique in the presence of water. Pelletisation condition is maintained in such a manner that the pelletised particles retain less than 15% water and green strength for handling in sintering operation. Sintering of the pelletised particles is carried out by the down draft sintering system to convert into cement clinkers. Principles of Down Draft Sintering (DDS) system is commercially known in iron and steel industries for agglomeration of iron ore fines for blast furnace use in making iron. The granulated material of the cement raw mix is charged into the sintering hearth which is like a pot consisting of grate bars at the bottom. The charge material rests on a false hearth (50 mm thick) layer over the grate bar in form of a bed ranging 300 to 600 mm thickness. Top of the charge material bed in the sintering hearth is ignited by using burners or pre-burnt coal or coke to create heat front. Air suction pressure between 100 to 1000 mm WG is maintained below the grate bars to move the heat front 15 to 20 mm per minute from top to bottom of the bed. Drying calcinations, sintering and then cooling of the material in formation of clinker takes place on a static bed. Presence of solid carbon within the charge material generates in-situ heat ranging 1000 to 1500°C or higher temperature in the bed. Conversion of charge bed into cement clinker takes 15 to 30 minutes time depending on the height and permeability of the charge bed, air suction pressure, sintering temperature etc. Clinkersied product discharged from the sinter pot is crushed to below 10 mm sizes to store or to use in grinding to make cement.

Based on the raw mix composition and presence of sulphate chloride, fluorite bearing additive, the high iron cement clinker produced by the above method contains C₂F, C₄AF, C₆AF₂ and C₆A₂F mineral structures of ferrite compounds, di- and tri-calcium silicates, and calcium sulphoaluminate (C₄A₃S), calcium fluoroaluminate (C₁₁A-CaF₂), calcium chloroaluminate (C₁₁A₇ClCl₂), calcium sulphoaluminogerrite (C₂AₓF₁₋ₓSa), [where x varies between 0.1 to 0.8 and n varies 0.05 to 0.5] as the assemblage of different cement mineral phase [C-CaO, F- Fe₂O₃, A- Al₂O₃, S-SO₄]. Ferrite phases ranging 30 to 70% in association with dicalcium silicate silicate or tricalcium as the primary mineral constituents occur in the high iron cement clinker Other minerals like C₄AS, C₁₁A-CaF₂, C₁₁A-CaCl₂, and calcium sulpho aluminoferrite also exist in different proportions with the ferrite phase depending the nature of additives and fluxes.

Sintering and cooling operation of down draft sintering (DDS) methods is very fast than the other existing cement clinkerization system, which promotes to maintain micro-crystallinity of different cement mineral phases and higher degree of solid solution of ferrite minerals in the clinker. High hydraulic strength of cement is related to the composition and crystallinity of various cement mineral phases. Particularly the high iron cement clinkers made in the present process mainly acicular to tabular shape ferrite mineral phases of below 10 micron sizes and dicalcium and tricalcuim silicate crystals of below 40 micron sizes and solid solution of C₆AF₂ and C₆A₂F ferrite mineral structures. Due to the special features of mineralogical and microstructural characteristics in the strength of microstructural characteristics in the high iron cement clinker consisting of 40% iron and above help to achieve hydraulic strength as high as 120 MPa in the cement after 28 days of curing. Further, the formulation of high iron cement clinker is mostly by solid state reaction of particles with minimum fusion which helps to retain spongy and porous character for easier grinding to cement fineness.

Laboratory scale down draft sintering (DDS) system consisting of rectangular box type sintering hearth of size (300 x 300) mm² cross section area and 500 mm height of capacity of feed 50 to 60 kg of granulated raw mix per batch has been adapted in conducting the experiments at different bed height, suction pressure, sintering and cooling rate on various compositions to optimize the process for commercial production of high iron cement clinker.

The following examples are given by way of illustration and therefore should not be construed to limit the scope of the present invention.

### EXAMPLE 1

Dry powdery materials of acetylene plant lime sludge [63.25% CaO], blast furnace (B.F.) dust [46.70% Fe₂O₃] 7.24% SiO₂ and 30.17% carbon] and additives are mixed to make 50 kg raw material mixture in which the weight ratio of lime sludge and B.F. dust is 2:1. The blended materials are pulverized in a ball mill for homogenization and to maintain below 150 mesh (BSS) particle fineness. The homogenized raw mixture consists of 1.96, 0.21 and 0.31 as the chemical ratio of CaO/(Al₂O₃+Fe₂O₃), SiO₂/(Al₂O₃+Fe₂O₃) and Al₂O₃+Fe₂O₃ respectively. The homogenized raw mixture is then pelletised in presence of water by a disc granulator to make below 15 mm size granules consisting of 10% water. Bulk density of the green granulated particle is 1250 kg/m³, 50 kg of the green granulated material is charged into a sintering hearth of (300 mm x 300 mm) cross - section and 500 mm height like a box to make 450 mm thick bed in a laboratory set up DDS unit. Top of the bed is ignited by burning charcoal on it and 350 mm water gauge (WG) air suction pressure is applied below the charge bed to complete the sintering and cooling operation in 30 minutes to prepare iron cement clinker. Solid carbon present in the pelletised granules generate in situ heat for clinker formation at 1375°C temperature. 30 kg of iron rich clinker is produced from 50 kg of charge material.

The clinker consist of 59.70% Al₂O₃ and 25.5% Al₂O₃+Fe₂O₃ as major chemical constituent and 52% iron bearing ferrite compounds and 40% tricalcium silicate as the major mineral phase. The clinker is ground to make cements with and without gypsum. The cement prepared without gypsum possesses 45 to 160 minute of setting time, and 420, 560, 710 kg cm² respectively the compressive strength (1:3 cement and sand mortar ratio) at 3, 7 and 28 days of curing. The cement prepared with 4% gypsum shows 85 to 210 minute setting time and compressive strength of 430, 576, 750 kg/cm² respectively of 1:3 cement and sand mortar cube at 3, 7 and 28 days of curing. Effect of gypsum as a set retarder is very negligible on strength development of the cement. Expansion of the cements is within the limit as per Portland cement. This type of high iron cement is suitable for metallurgical and constructional use.

### EXAMPLE 2

Dry powdery materials of acetylene plant lime, Basic Oxygen Furnace (BOF) dust [76.80% Fe₂O₃, 3.60% SiO₂, 2.85% Al₂O₃, 11.08% CaO, 0.15 TiO₂, 0.78% (Na₂O+K₂O), clay (50.59% SiO₂, 20.82% Al₂O₃, 14.20% Fe₂O₃, 1.65% TiO₂) and coke breeze [68% fixed carbon, 29% ash, 3% volatile] are used in different weight percentages to prepare 50 kg raw mixture consisting of 7% solid carbon and 1.48, 0.27, 0.3 as the chemical ratio of CaO/( Al₂O₃+Fe₂O₃), SiO2/(Al₂O₃+Fe₂O₃) and Al₂O₃+Fe₂O₃ respectively. Granulated pellets of below 15mm sizes of the ground mixture are prepared with 12% water by the disc granulator. 50 kg of the granulated pellets is used to make clinker by the laboratory set up DDS system maintaining 400 mm bed height and applying 250 mm WG air suction pressure to complete the sintering and cooling in 28 minutes. Coke breezer present in the granulated pellets generates in situ heat and clinker formation has taken place at 1420°C temperature. 34 kg of clinker has been obtained from 50 kg of feed.

The clinker contains 53% CaO and 33% Fe₂O₃. Mineralogically the clinker consists of acicular pattern of iron rich ferrite minerals of C₆AF₂, C₄AF and crystals of tricalcium silicate (C₃S) and dicalcium silicate (C₂S) of below 40 micron sizes. Cement prepared from this type of clinker shows 120 to 240 minute setting time and compressive strength of 1:3 cement and mortar at 1, 3, 7, 28 days of curing 180, 430, 610 and 780 kg/cm² respectively. The use of gypsum as set retarder in the cement shows less significant effect in respect to setting time and strength. This type of cements is suitable for metallurgical use as well as in building constructions.

### Example 3

Calcined lime (88% CaO, 4.50% SiO₂, 1.80 MgO), iron ore slime (93% Fe₂O₃, 1.12% SiO₂, 2.17% Al₂O₃), lateritic bauxite (38% Fe₂O₃, 41.5% Al₂O₃, 3.8% SiO₂, 1.8% TiO₂), char fines (88% fixed carbon), fluorite and gypsum are mixed in the weight percentage of 48,22, 16, 10.2 and 2 respectively to make 50 kg of raw material mixture. It is then ground in the hall mill to a particle fineness of below 150 mesh (BSS sieve) size. Chemical ratio of CaO (Al₂O₃+Fe₂O₃) and Al₂O₃+Fe₂O₃ of the raw material mixture is in the order of 1.42, 0.2 and 0.35 respectively. The powdery mixture is granulated with 15% water to make below 12 mm size granules. Then 50 kg of granulated material is used to make clinker by the down draft sintering (DDS) technique at 1400°C using the 460 mm bed height of the material.

The resultant clinker contains 56% CaO and 34% Fe₂O₃as the major constituent. Different mineral phases of the clinker are C₆AF₂, C₄AF, calcium silicates (C₃S, C₂S), C₁₁A₇CaF₂) calcium sulpho aluminate (C₄A₃S), calcium sulpho alumino ferrite etc. The clinker exhibits very fine crystalline structure of different mineral phases. Cement prepared with addition of 10% gypsum shows faster setting (less than 60 minutes) and very high compressive strength in the order of 510; 700 kg/cm₂ in 3, 7 and 28 days of curing. Use of gypsum has got very positive effect inn this type of iron rich cement.

It is inferred that the manufacture of high iron cement clinkers for different applications using various types of raw materials in the present process is quite flexible. Rapid sintering and cooling conditions of the process is a special feature to achieve fine crystalline structure, high temperature solid solutions of ferrite and other mineral phases in the high iron cement clinker and high hydraulic strength of the cement. In addition to the clinker chemistry and mineralogy, the development of high hydraulic, strength of the high iron cement is also related to the cement particle size and content of gypsum as set retarder.

The main advantages of the presence invention are:
1. Use of wide varieties of raw materials, industrial and mining solid wastes, fines, etc. rich in lime and iron, and various types of fluxing materials.
2. Scope for utilization of solid carbon bearing materials like coal, coke, char, waste fines as main source of fuel.
3. Flexibility in raw mix design in manufacture of iron rich cements for various uses.
4. High thermal efficiency in clinker formation due to the presence of in situ carbon within the particle.
5. Rapid sintering and cooling rate of the sintering system, promotes high degree of solid solution in iron mineral phases and micro-crystallinity in the clinker to achieve better cement property.
6. Minimization of pollution as the sintering system consists of both dry and scrubber for cleaning of gas and dust.
7. High productivity of the sintering system due to low retention time.
8. Cost effective as the sintering system is free of refractory materials.

## Claims

1. A process for the manufacture of high iron hydraulic cement clinker wherein Fe₂O₃ is at least 33 % using down draft sintering technique which comprises preparing a homogenous raw mixture of raw materials selected from limestone, lime, lime sludge, lime bearing solid wastes, iron ore, slime red mud, ferruginuous bauxite, laterite, clay, iron oxide containing metallurgical and chemical wastes, slag, coke breeze, coal char, carbonaceous sludge, carbon bearing solid wastes and any mixture thereof, wherein the chemical ratio of CaO/(Al₂O₃+Fe₂O₃), SiO₂/(Al₂O₃+Fe₂O₃) and (Al₂O₃+Fe₂O₃) in the homogenized raw mixture is between 1.3 to 2.5, 0.2 to 0.5 and 0.25 to 0.8 respectively, with the content of Fe₂O₃ in the homogenized raw mixture being in the range of les than 40% and the content of solid carbon in the homogenized raw mixture being in the range of 4 to 12%, pelletising the resultant homogenized raw mixture in the presence of water to prepare granulated particles, sintering and cooling the pelletised granulated particles by down draft sintering technique to convert into clinker, grinding the clinker particles with and without gypsum to make high iron hydraulic cements and binders for different applications.

2. A process as claimed in claim 1 wherein the homogeneous raw mixture is prepared in semi-wet or dry form by blending or grinding depending on the particle fineness of the raw materials.

3. A process as claimed in claim 1 wherein the particle fineness of the homogenized raw mixture is below 150 mesh (100 micron) size.

4. A process as claimed in claim 1 wherein pelletising of the homogenized mixture is done in the in presence of water to make granulated particles below 15 mm in size and to consist of 8 to 15% water.

5. A process as claimed in claim 1 wherein the sintering of the granulated particles is done at a temperature in the range of 1050 to 1450°C for conversion into clinker by down draft sintering, wherein an operating condition consisting of 300 to 600 mm bed height of the granulated particle, 200 to 800 mm water gauge (WG) air suction pressure below the bed, and 15 to 20 mm vertical sintering speed from top to bottom of the bed is maintained.

6. A process as claimed in claim 1 wherein the product obtained is cooled between 200 to 1000°C and 400 to 600°C depending on the granulated particle size.

7. A process as claimed in claim 1 wherein the both sintering and cooling operation in cement clinker formation is within the bed itself and is done in a period of 15 to 30 minutes.

8. A process as claimed in claim 1 wherein the sintering hearth is free of refractory lining and attached to the sintering hearth are scrubbers for removal of hot gas carrying dust particles to control pollution during the sintering operation.

9. A process as claimed in claim 1 wherein the clinkerised lumpy aggregates are crushed and then ground with or without gypsum and other additives to make cements and binders for different applications.

10. A process as claimed in claim 1 wherein a mineralizing agent is added to the homogenized raw mixture and is selected from the group consisting of sulphate, fluorine, chlorine bearing minerals and chemical wastes.

11. A process as claimed in claim 1 wherein the iron (Fe₂O₃) content of the homogenized raw mixture is less than 40%.

12. A process as claimed in claim 1 wherein the rate of sintering and cooling respectively varies between 200 to 1000°C and 400 to 600°C per minute.

## Revendications

1. Procédé de fabrication de clinker pour ciment hydraulique à teneur élevée en fer dans lequel Fe₂O₃ est d'au moins 33 % en utilisant une technique de frittage à circulation descendante qui comprend la préparation d'un mélange brut homogène de matières premières choisies parmi le calcaire, la chaux, le lait de chaux, les déchets solides contenant de la chaux, le minerai de fer, la boue rouge de schlamms fins, la bauxite ferrugineuse, la latérite, l'argile, l'oxyde de fer contenant des déchets métallurgiques et chimiques, le laitier, le poussier de coke, le charbon cokéfié, la boue carbonée, les déchets solides contenant du carbone et n'importe quel mélange de ceux-ci, dans lequel le rapport chimique de CaO/(Al₂O₃ + Fe₂O₃), SiO₂/(Al₂O₃ + Fe₂O₃) et (Al₂O₃ + Fe₂O₃) dans le mélange brut homogénéisé se situe respectivement entre 1,3 à 2,5, 0,2 à 0,5 et 0,25 à 0,8, avec la teneur en Fe₂O₃ dans le mélange brut homogénéisé se situant dans la plage de moins de 40 % et la teneur en carbone solide dans le mélange brut homogénéisé se situant dans la plage de 4 à 12 %, la mise en pastilles du mélange brut homogénéisé résultant en présence d'eau pour préparer des particules granulées, le frittage et le refroidissement des particules granulées mises en pastilles par technique de frittage à circulation descendante pour la conversion en clinker, le broyage des particules de clinker avec et sans gypse pour fabriquer des ciments et des liants hydrauliques à teneur élevée en fer pour des applications différentes.

2. Procédé selon la revendication 1, dans lequel le mélange brut homogène est préparé en une forme semi-humide ou sous la forme sèche par mélange ou broyage en fonction de la finesse des particules des matières brutes.

3. Procédé selon la revendication 1, dans lequel la finesse des particules du mélange brut homogénéisé se situe en dessous d'une taille de 150 mesh (100 microns).

4. Procédé selon la revendication 1, dans lequel la mise en pastilles du mélange homogénéisé est effectuée en présence d'eau pour fabriquer des particules granulées d'une taille située en dessous de 15 mm et constituées de 8 à 15 % d'eau.

5. Procédé selon la revendication 1, dans lequel le frittage des particules granulées est effectué à une température dans la plage de 1 050 à 1 450°C pour la conversion en clinker par frittage à circulation descendante, dans lequel une condition de fonctionnement consistant en une hauteur de lit de 300 à 600 mm des particules granulées, 200 à 800 mm de colonne d'eau (WG) de pression de succion d'air en dessous du lit, et 15 à 20 mm de vitesse de frittage vertical du sommet au fond du lit est maintenue.

6. Procédé selon la revendication 1, dans lequel le produit obtenu est refroidi entre 200 à 1000°C et 400 à 600°C en fonction de la taille des particules granulées.

7. Procédé selon la revendication 1, dans lequel à la fois l'opération de frittage et de refroidissement dans la formation de clinker de ciment s'effectue à l'intérieur du lit lui-même et est effectuée sur une période de 15 à 30 minutes.

8. Procédé selon la revendication 1, dans lequel le creuset, de frittage est exempt de revêtement réfractaire, et dans lequel sont fixés au creuset de frittage des épurateurs pour l'élimination du gaz chaud transportant des particules de poussière pour contrôler la pollution durant l'opération de frittage.

9. Procédé selon la revendication 1, dans lequel les agrégats grumeleux clinkerisés sont concassés et ensuite broyés avec ou sans gypse et d'autres additifs pour fabriquer des ciments et des liants pour des applications différentes.

10. Procédé selon la revendication 1, dans lequel un agent de minéralisation est ajouté au mélange brut homogénéisé et est choisi parmi le groupe constitué de minéraux contenant du sulfate, du fluor, du chlore, et déchets chimiques.

11. Procédé selon la revendication 1, dans lequel la teneur en fer (Fe₂O₃) du mélange brut homogénéisé est inférieure à 40 %.

12. Procédé selon la revendication 1, dans lequel la vitesse respectivement de frittage et de refroidissement varie entre 200 à 1000°C et 400 à 600°C par minute.

## Patentansprüche

1. Verfahren zur Herstellung von hydraulischem Zementklinker mit hohem Eisengehalt, bei welchem der Fe₂O₃ Gehalt mindestens 33 % beträgt, unter Anwendung der Saugzugsintertechnik, das folgende Arbeitsgänge umfasst: Herstellen einer homogenen Rohmixtur aus Rohmaterialien, die aus Kalkstein, Kalk, Kalkschlamm, kalkhaltigen festen Abfällen, Eisenerz, rotem Schleimschlick, eisenhaltigem Bauxit, Laterit, Ton, Eisenoxid enthaltenden metallurgischen und chemischen Abfällen, Schlacke, Koksklein, Kohlenkoks, kohlehaltigem Schlamm, kohlenstoffhaltigen festen Abfällen und irgendeiner Mixtur davon ausgewählt sind, wobei das chemische Verhältnis von CaO/(Al₂O₃ + Fe₂O₃), SiO₂/(Al₂O₃ + Fe₂O₃) und (Al₂O₃ + Fe₂O₃) in der homogenisierten Rohmixtur zwischen 1,3 bis 2,5, 0,2 bis 0,5 und 0,25 bis 0,8 jeweils beträgt bei einem Anteil an Fe₂O₃ in der homogenisierten Rohmixtur im Bereich von weniger als 40 % und einem Anteil an festem Kohlenstoff in der homogenisierten Rohmixtur im Bereich von 4 bis 12 %, Pelletisieren der resultierenden homogenisierten Rohmixtur in Anwesenheit von Wasser zur Herstellung von granulierten Partikel, Sintern und Kühlen der pelletisierten granulierten Partikel durch Saugzugsintertechnik zur Umwandlung in Klinker, Zerkleinern der Klinkerpartikel mit und ohne Gips zur Herstellung von hydraulischen Zement- und Binderarten mit hohem Eisengehalt für unterschiedliche Anwendungen.

2. Verfahren nach Anspruch 1, wobei die homogene Rohmixtur in halbnasser oder trockener Form durch Mischen oder Zerkleinern, je nach der Feinheit der Partikel der Rohmaterialien, hergestellt wird.

3. Verfahren nach Anspruch 1, wobei die Feinheit der Partikel der homogenisierten Rohmixtur unter der 150 mesh (100 Mikron)-Größe liegt.

4. Verfahren nach Anspruch 1, wobei das Pelletisieren der homogenisierten Mixtur in Anwesenheit von Wasser erfolgt zur Herstellung von granulierten Partikeln mit einer Größe von unter 15 mm und zu 8 bis 15 % aus Wasser bestehend.

5. Verfahren nach Anspruch 1, wobei das Sintern der granulierten Partikel bei einer Temperatur im Bereich von 1050 bis 1450°C erfolgt zur Umwandlung in Klinker durch die Saugzugsintertechnik, wobei eine Betriebsbedingung bestehend aus 300 bis 600 mm Betthöhe der granulierten Partikel, 200 bis 800 mm Wassersäule (WG) Luftsaugdruck unter dem Bett und 15 bis 20 mm vertikale Sintergeschwindigkeit von der Ober- bis zur Unterseite des Bettes aufrecht erhalten wird.

6. Verfahren nach Anspruch 1, wobei das erhaltene Produkt bei 200 bis 1000°C und 400 bis 600°C, je nach der Größe der granulierten Partikel, gekühlt wird.

7. Verfahren nach Anspruch 1, wobei sowohl der Sinter- als auch der Kühlvorgang bei der Zementklinkerbildung innerhalb des Bettes selbst und während eines Zeitraums von 15 bis 30 Minuten ablaufen.

8. Verfahren nach Anspruch 1, wobei der Sinterherd frei von einer feuerfesten Auskleidung ist und an den Sinterherd Abscheider befestigt sind zur Entfernung des Staubteilchen mit sich führenden heißen Gases zum Zweck der Verschmutzungskontrolle während des Sintervorgangs.

9. Verfahren nach Anspruch 1, wobei das gesinterte klumpige Aggregat zermalmt und dann mit oder ohne Gips und anderen Zusatzstoffen gemahlen wird, um Zement- und Binderarten für unterschiedliche Anwendungen herzustellen.

10. Verfahren nach Anspruch 1, wobei ein mineralbildender Wirkstoff zur homogenisierten Rohmixtur hinzugefügt wird, der aus der Gruppe ausgewählt ist, die aus sulphat-, fluor- und chlorhaltigen Mineralien und chemischen Abfallstoffen besteht.

11. Verfahren nach Anspruch 1, wobei der Eisengehalt (Fe₂O₃) der homogenisierten Rohmixtur weniger als 40 % beträgt.

12. Verfahren nach Anspruch 1, wobei die Geschwindigkeit des Sintems und Kühlens jeweils zwischen 200 bis 1000°C und 400 bis 600°C pro Minute schwankt.
